# FASCICULE DE BREVET EUROPEEN

(11) **EP 0 616 968 B1**
(45) Date de publication et mention de la délivrance du brevet: **13.08.1997**
(21) Numéro de dépôt: 93490021.8
(22) Date de dépôt: 24.11.1993
(51) Int. Cl.: B65H 75/44, B60P 7/04

(54) **Dispositif d'enroulement à commande manuelle d'un élément enroulable autour d'un arbre ou d'un tambour**
Handbetriebene Vorrichtung zum Wickeln von Wickelgut auf eine Welle oder eine Trommel
Manually operated device for winding an element about a shaft or a drum

(30) Priorité: 26.03.1993 FR 9303708
(43) Date de publication de la demande: 28.09.1994
(73) Titulaire: Thiriet, Philippe, F-08420 Warcq (Ardennes) (FR)
(72) Inventeur: Thiriet, Philippe, F-08420 Warcq (Ardennes) (FR)
(74) Mandataire: Duthoit, Michel

(56) Documents cités:
- US-A- 4 860 606
- US-A- 5 129 698

## Description

La présente invention est relative à un dispositif d'enroulement, à commande manuelle, d'un élément enroulable, tel que par exemple, câble, filin, film, nappe, toile ou bâche, autour d'un arbre ou tambour.

Elle trouvera son application dans de nombreux domaines où il est nécessaire, pour des raisons quelconques, de procéder à l'enroulement et/ou déroulement d'un élément.

Par exemple, dans le domaine du transport, il est connu des caisses de camions ou remorques, utilisés pour le transport de marchandises, équipées de bâches, pour protéger ces dernières.

Pour faciliter le chargement et/ou le déchargement des marchandises, il est courant de rendre les bâches amovibles afin de pouvoir les ôter ou les replacer rapidement.

Ces bâches sont, dans ce cas, suspendues par des chariots dans un rail, tels des rideaux. La bâche est ensuite tendue, lorsqu'elle est déployée, en divers points de la caisse.

Une autre possibilité consisterait à prévoir l'enroulement des bâches latérales autour d'un arbre disposé verticalement, qu'il serait alors nécessaire de mettre en rotation dans un sens ou dans l'autre pour soit dérouler, soit enrouler la bâche.

Dans le domaine des enrouleurs, il est connu, par exemple, du document US-A-4.866.606, un dispositif d'enroulement, à commande manuelle, d'un élément enroulable, tel que par exemple câble, filin, film, nappe, toile ou bâche, autour d'un arbre ou tambour, comprenant :
- un mécanisme d'entraînement de l'arbre ou tambour, constitué par un pignon denté assujetti directement ou indirectement audit arbre ou tambour, mobile en rotation,
- une poignée de manoeuvre, montée oscillante, agissant sur ledit mécanisme,
- des premiers et seconds moyens d'encliquetage, coopérant entre eux, pour sélectionner un sens de rotation pour ledit arbre ou tambour et pour entraîner en rotation ledit arbre ou tambour dans ledit sens par oscillation de la poignée de manoeuvre.

Lesdits moyens comprennent un jeu de deux basculeurs à deux cliquets, coopérant avec des mécanismes de rappel en position constitués de billes montées sur ressorts, de manière à permettre, notamment de sélectionner le sens de rotation.

Toutefois, de tels dispositifs ne sont pas toujours satisfaisants. En effet, leurs caractéristiques ne permettent pas de les utiliser pour de fortes charges. Ils ne peuvent donc pas être employés, par exemple, comme tendeurs de bâche pour véhicule de transport. De plus, leur structure, leur fonctionnement, et leur manipulation sont particulièrement complexes.

Le but de la présente invention est de proposer un dispositif d'enroulement, à commande manuelle, d'un élément enroulable, tel que par exemple câble, filin, film, nappe, toile ou bâche, autour d'un arbre ou tambour qui permette une telle mise en oeuvre.

Bien que plus spécialement développée pour cette application, la présente invention est nullement limitée à celle-ci, et peut, d'une façon générale, permettre l'enroulement d'un élément souple ou semi-rigide autour d'un arbre ou tambour.

L'un des buts de la présente invention est de proposer un dispositif d'enroulement à commande manuelle qui soit commode d'utilisation pour l'opérateur et qui présente une grande robustesse aux chocs ainsi qu'une bonne fiabilité et puissance.

Un autre but de la présente invention est de proposer un dispositif d'enroulement qui soit universel, c'est-à-dire qui permette la commande de rotation d'un arbre ou tambour, placé à droite et/ou à gauche du dispositif.

D'autres buts et avantages de la présente invention apparaîtront au cours de la description qui va suivre qui n'est cependant donnée qu'à titre indicatif et qui n'a pas pour but de la limiter.

Selon l'invention, le dispositif d'enroulement, à commande manuelle, d'un élément enroulable, tel que par exemple câble, filin, film, nappe, toile ou bâche, autour d'un arbre ou tambour, comprenant :
- un mécanisme d'entrainement de l'arbre ou tambour, constitué par un pignon denté assujetti directement ou indirectement audit arbre ou tambour, mobile en rotation,
- une poignée de manoeuvre, montée oscillante, agissant sur ledit mécanisme,
- des premiers et seconds moyens d'encliquetage, coopérant entre eux, pour sélectionner un sens de rotation pour ledit arbre ou tambour et pour entraîner en rotation ledit arbre ou tambour dans ledit sens par oscillation de la poignée de manoeuvre,
   est caractérisé par le fait que lesdits moyens comprennent :
- un basculeur à deux cliquets, prévu pour coopérer avec ledit pignon denté, pour constituer lesdits premiers moyens d'encliquetage, ledit basculeur étant monté mobile autour d'un axe et présentant un ressort de rappel dont l'une des extrémités est fixe et l'autre solidaire du basculeur, l'axe longitudinal du ressort et l'axe imaginaire passant par l'extrémité fixe du ressort et l'articulation dudit basculeur étant concourants de manière à permettre ladite sélection du sens de rotation, selon deux positions stables, lesdits cliquets dudit basculeur présentant chacun, d'un côté, une partie inclinée, apte à autoriser la rotation du pignon dans un premier sens et, de l'autre, une partie abrupte, apte à venir en appui sur le flanc des dents dudit pignon afin de bloquer ladite rotation dans l'autre sens,
- un cliquet réversible, prévu en extrémité de la poignée de manoeuvre pour coopérer avec ledit pignon denté, pour constituer lesdits seconds moyens d'encliquetage, ledit cliquet définissant un ergot présentant, d'un côté, une pente, apte à autoriser le retour en arrière vers son point de départ de ladite poignée de manoeuvre, ladite rotation étant alors bloquée par ledit basculeur, et de l'autre, une partie abrupte, apte à porter sur les dents du pignon de manière à permettre ledit entraînement en rotation dans ledit sens autorisé.

La présente invention sera mieux comprise à la lecture de la description suivante, accompagnée des dessins en annexe qui en font partie intégrante.

La figure 1 montre une vue en coupe longitudinale d'un dispositif d'enroulement, selon la présente invention, dans une première position.

La figure 2 montre une vue de dessus du dispositif de l'invention représentée à la figure 1.

La figure 3 montre le dispositif de la présente invention, en coupe longitudinale, tel qu'illustré à la figure 1, mais dans une seconde position.

La figure 4 montre une vue de gauche du dispositif de la présente 1, représentée figure 1.

La figure 5 montre schématiquement une application du dispositif d'enroulement de la présente invention à l'enroulement de bâches latérales d'un véhicule.

L'invention vise un dispositif d'enroulement, à commande manuelle, d'un élément enroulable. Dans de nombreux cas, il est nécessaire d'enrouler un tel élément, tel que par exemple câble, filin, film, nappe, toile ou bâche ou similaire, autour d'un arbre ou tambour.

Une des applications, non limitative, réside dans l'enroulement des bâches latérales de caisses de véhicules ou de remorques.

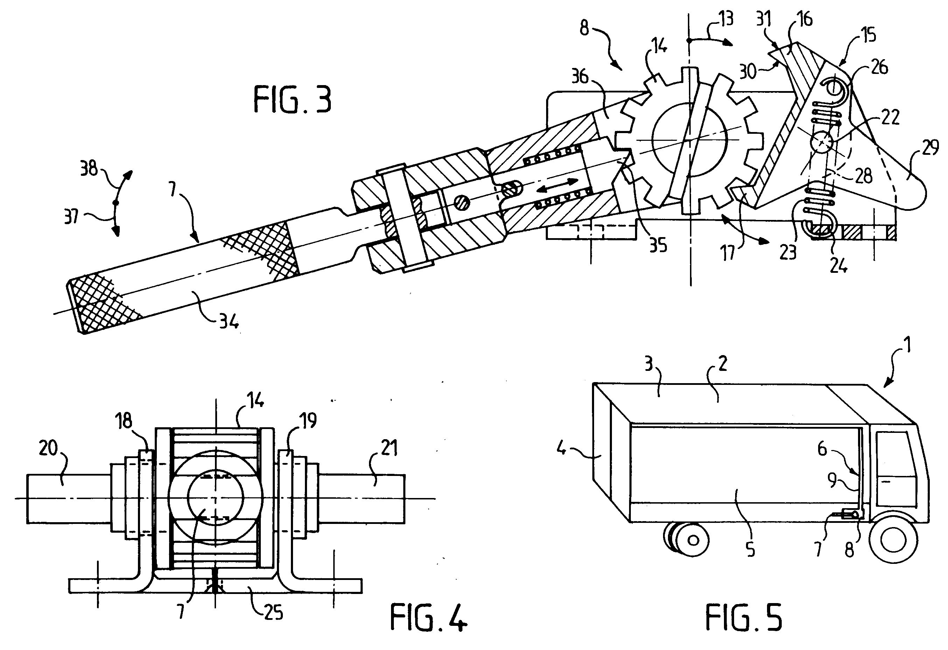

La figure 5 schématise une telle application sur laquelle le véhicule 1 présente une caisse 2, fermée à sa partie supérieure par un toit 3, à sa partie arrière par des portes 4, et fermée latéralement par deux bâches 5.

L'accès à l'intérieur de la caisse est autorisé par les portes, mais dans certains cas, pour faciliter le chargement ou le déchargement, il est intéressant de pouvoir escamoter partiellement ou totalement les bâches latérales 5.

Afin de permettre cette manoeuvre, la présente invention propose un dispositif d'enroulement 6 comprenant un poigne de manoeuvre 7, agissant sur un mécanisme d'entraînement 8, de l'arbre ou du tambour 9.

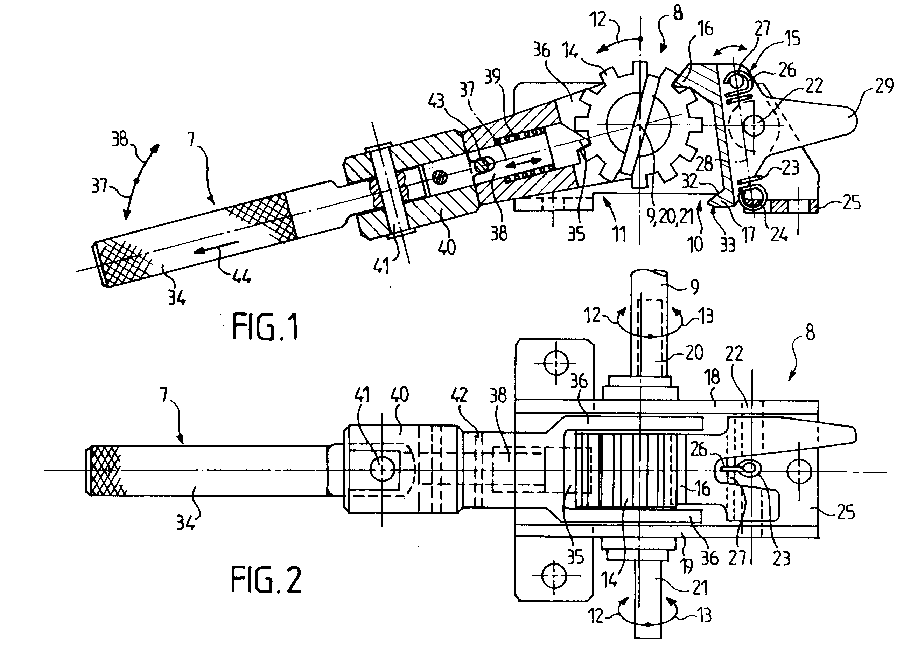

La figure 1 montre plus précisément la structure du dispositif d'enroulement de la présente invention qui comporte :
- des premiers moyens d'encliquetage 10 pour, d'une part, sélectionner un sens de rotation pour le dit arbre ou tambour 9, et pour, d'autre part, autoriser sa rotation dans un sens et le bloquer dans l'autre,
- des seconds moyens d'encliquetage 11, coopérant avec les dit premiers moyens 10, pour entraîner en rotation le dit arbre ou tambour dans le dit sens autorisé, par oscillation de la poignée 7 de manoeuvre, et pour permettre le retour de la poignée 7 vers son point de départ, la dite rotation étant alors bloquée par les dits premiers moyens.

La figure 2 montre une vue de dessus du dispositif, représenté à la figure 1, qui permet de visualiser l'arbre 9, à entraîner en rotation, assujetti au mécanisme d'entraînement 8. Les deux mouvements de rotation, pour l'enroulement ou le déroulement, sont schématisés par les flèches 12 et 13.

La figure 1 montre le dispositif dans une première position autorisant le sens de rotation 12, tandis que la figure 2 montre une deuxième position du dispositif autorisant dans ce cas, la rotation dans le sens de la flèche 13.

Les premiers moyens d'encliquetage 10 sont constitués par un pignon denté 14, et par un basculeur 15, notamment à deux cliquets 16 et 17.

Le pignon denté 14 est monté en rotation entre deux flasques 18, 19, et prolongé de part et d'autre part par une portée 20, 21, qui permettront son assujettissement au tambour ou arbre 9, d'un côté ou de l'autre, ou voire même des deux côtés, comme le montrent les figures 2 et 4.

Il est à noter que cet assujettissement au dit arbre ou tambour 9 peut être réalisé directement ou indirectement selon des techniques connues de l'Homme de l'Art. Dans le cas de la présente figure, le dit arbre 9 est coaxial et associé directement au pignon denté. Cependant, on pourrait prévoir un mécanisme de réduction éventuellement.

Le basculeur 15 est prévu à deux dispositions stables, la première représentée à la figure 1 et la seconde représentée à la figure 3. En outre, il est prévu pour coopérer avec le dit pignon denté 14 pour constituer un premier encliquetage.

Plus précisément, le basculeur 15 est monté, dans une chape fixe, constituée par les deux flasques 18, 19, mobile autour d'un axe de rotation 22.

Par ailleurs, pour maintenir le basculeur dans ses deux dispositions stables, il présente un ressort de rappel 23 dont l'une des extrémités 24 est solidaire de la chape fixe, et, en particulier dans le présent cas, d'une platine 25 réunissant les deux flasques 18, 19. L'autre extrémité 26 du ressort est accrochée à un axe 27 pour le rendre solidaire du basculeur 15.

Comme le montrent particulièrement les figures 1 et 3, l'axe longitudinal 28 du ressort et l'axe imaginaire passant par l'extrémité fixe 24 du ressort, et l'articulation 22 du basculeur sur la chape 18, 19, 25 sont concourants pour assurer les deux positions stables.

Le basculeur comporte, en outre, un levier 29 qui permet de déplacer en rotation le basculeur autour de son axe d'articulation 22, pour engrener sur le pignon 14, soit le premier cliquet 16, soit le second cliquet 17.

Lorsque le cliquet 16 engrène sur le pignon 14, la rotation de ce dernier sera autorisée uniquement dans le sens de la flèche 12, ce grâce à la partie inclinée 30 du cliquet, celui-ci reculant alors grâce à l'articulation 22 et au ressort 23, lors de la rotation pour retomber dans la dent suivante du pignon.

En revanche, la rotation inverse est interdite par la partie abrupte 31 du cliquet 16. Cela est particulièrement illustré à la figure 1.

Dans la deuxième position illustrée à la figure 3, lorsque le cliquet 17 engrène dans le pignon, celui-ci a sa rotation autorisée uniquement selon la flèche 13.

Selon le même principe que précédemment, la partie inclinée 32 du cliquet 17, le ressort 28 et l'articulation 22, autorisent son escamotage, tandis que la partie abrupte 33 du cliquet 17 vient en butée sur le flanc de la dent du pignon 14.

Dans le mode représentaté, le basculeur 15 a, en quelque sorte, une forme de C dont l'une des extrémités est constituée par le cliquet supérieur 16 et le cliquet inférieur 17, agissant respectivement sur la partie supérieure du pignon 14 ou sa partie inférieure.

Comme nous l'avons vu précédemment, chaque cliquet 16, 17 coopère avec le pignon 14 pour qu'il constitue le dit premier encliquetage, et le choix du cliquet 16 ou 17 en prise sur le pignon 14 sélectionnera le dit sens autorisé 12 et 13.

Cela étant, pour manoeuvrer le pignon 14, le dispositif comporte un levier 34, monté oscillant, et portant un cliquet réversible 35, prévu pour coopérer avec le dit pignon denté 14, constituant ainsi les dits seconds moyens d'encliquetage 11.

Le levier est monté en rotation, au moins partielle, autour de l'axe 20-21 portant le pignon 14, par l'intermédiaire d'une chape 36.

Aussi, on autorise son oscillation selon les flèches 37-38 représentées sur les figures 1 et 3.

Le cliquet réversible 35 est quant à lui prévu en extrémité du levier 34, et monté mécaniquement à ce niveau, afin d'autoriser une rotation d'au moins 180 degrés du cliquet réversible 35 autour de son axe longitudinal 37.

Il est à noter que, dans le présent cas, le cliquet réversible du levier 34 et le dit basculeur 15 à deux cliquets 16 et 17 sont disposés de part et d'autre du pignon denté 14. Cependant, d'autres configurations sont envisageables.

Le cliquet 35 est porté par un piston 38, et poussé par un ressort 39 vers le pignon denté 14. Le piston 38 est monté coulissant dans un alésage prévu à cet effet, et le ressort 39 est prévu dans un logement de cet alésage et prend appui sur un épaulement, afin de permettre son éventuel escamotage.

Pour permettre la réversibilité de l'ergot 35, le levier 34 est apte à se désolidariser en rotation, au moins temporairement, de la partie ergot 35.

Les figures 1 et 2 montrent particulièrement un tel mécanisme constitué notamment par une douille 40 solidarisée sur le levier 34 proprement dit par une goupille 41.

A l'avant de la douille 40, il est prévu une seconde goupille 42, apte à coulisser dans un logement 43.

Ainsi, lorsque l'on combat la force du ressort 39, par une traction sur le levier selon la flèche 44, la goupille 42 va être libérée de son logement 43, et on autorisera alors la rotation de la douille, qui entraînera par conséquent la rotation du piston 38, et par suite de l'ergot 35.

Dans la position de la figure 1, la partie abrupte de l'ergot 35 étant dirigée vers le bas, et le pignon 14 ayant sa rotation bloquée dans ce sens par les premiers moyens d'encliquetage 10, lorsqu'on va déplacer le levier selon la flèche 38, l'ergot 35 et le piston 38 vont, à chaque dent, reculer vers l'arrière, compte tenu de la pente supérieure de l'ergot.

En revanche, lorsque l'on déplacera le levier selon la flèche 37, c'est la partie abrupte de l'ergot qui portera sur le pignon, et entraînera ce dernier.

A l'inverse, à la figure 3, la partie abrupte se trouve dirigée vers le haut et la pente de l'ergot vers le bas.

Lors du déplacement du levier selon la flèche 38, l'ergot 35 va entraîner le pignon 14. En revanche, lorsque l'on va redescendre le levier selon la flèche 37, le pignon 14 étant immobilisé par les moyens 10 dans ce sens, à chaque dent l'ergot va être repoussé dans son logement et va s'escamoter à chaque fois.

## Revendications

1. Dispositif d'enroulement (6), à commande manuelle, d'un élément enroulable (5), tel que par exemple câble, filin, film, nappe, toile ou bâche, autour d'un arbre ou tambour (9), comprenant :
- un mécanisme d'entraînement (8) de l'arbre ou tambour (9), constitué par un pignon denté (14) assujetti directement ou indirectement audit arbre (9) ou tambour, mobile en rotation,
- une poignée de manoeuvre (7, 34), montée oscillante, agissant sur ledit mécanisme (8),
- des premiers et seconds moyens d'encliquetage (10, 11), coopérant entre eux, pour sélectionner un sens de rotation pour ledit arbre ou tambour (9) et pour entraîner en rotation ledit arbre ou tambour (9) dans ledit sens par oscillation de la poignée de manoeuvre,
caractérisé par le fait que lesdits moyens (10, 11) comprennent :
- un basculeur (15) à deux cliquets (16, 17), prévu pour coopérer avec ledit pignon denté (14) pour constituer lesdits premiers moyens d'encliquetage (10), ledit basculeur (15) étant monté mobile autour d'un axe (22) et présentant un ressort de rappel (23) dont l'une des extrémités (24) est fixe et l'autre (26) solidaire du basculeur (15), l'axe longitudinal (28) du ressort et l'axe imaginaire passant par l'extrémité (24) fixe du ressort et l'articulation (22) dudit basculeur (15) étant concourants, de manière à permettre ladite sélection du sens de rotation, selon deux positions stables, lesdits cliquets (16, 17) dudit basculeur (15) présentant chacun, d'un côté, une partie inclinée (30, 32), apte à autoriser la rotation du pignon (14) dans un premier sens et, de l'autre, une partie abrupte (31, 33), apte à venir en appui sur le flanc des dents dudit pignon (14) afin de bloquer ladite rotation dans l'autre sens,
- un cliquet réversible (35), prévu en extrémité de la poignée de manoeuvre (7, 34) pour coopérer avec ledit pignon denté (14) pour constituer lesdits seconds moyens d'encliquetage (11), ledit cliquet (35) définissant un ergot présentant, d'un côté, une pente, apte à autoriser le retour en arrière vers son point de départ de ladite poignée de manoeuvre (7, 34) ladite rotation étant alors bloquée par ledit basculeur (15), et, de l'autre, une partie abrupte, apte à porter sur les dents du pignon (14) de manière à permettre ledit entraînement en rotation dans ledit sens autorisé.

2. Dispositif selon la revendication 1, caractérisé par le fait que ladite poignée de manoeuvre (7) présente un levier (34).

3. Dispositif selon la revendication 1, caractérisé par le fait que ledit arbre ou tambour (9) est coaxial et associé au pignon denté (14).

4. Dispositif selon la revendication 2, caractérisé par le fait que ledit lever (34) est monté en rotation, au moins partielle, autour d'un axe (20-21) et dudit pignon denté (14).

5. Dispositif selon la revendication 2, caractérisé par le fait que ledit basculeur (15) à deux cliquets (16, 17) et le cliquet réversible (35) du levier (34), sont disposés de part et d'autre du pignon denté (14).

6. Dispositif selon la revendication 1, caractérisé par le fait que ledit basculeur (15) est monté mobile dans une chappe fixe (18, 19, 25), ladite extrémité (24) du ressort (23) étant solidaire de ladite chappe (18, 19, 25).

7. Dispositif selon la revendication 2, caractérisé par le fait que le cliquet réversible (35) est prévu en extrémité du levier (34), et monté mécaniquement à ce niveau, afin d'autoriser une rotation d'au moins 180° du cliquet (35) autour de son axe longitudinal (37).

8. Dispositif selon la revendication 7, caractérisé par le fait que le cliquet (35) est porté par un piston (38), et poussé par un ressort (39) vers le pignon denté (14), ledit piston (38) et le levier (34) étant aptes à se désolidariser en rotation, au moins temporairement, pour permettre la réversibilité de l'ergot (35).

9. Dispositif selon la revendication 1, caractérisé par le fait que le basculeur (15) présente un cliquet supérieur (16) et un cliquet inférieur (17), disposés en C, agissant respectivement sur la partie supérieure du pignon (14) et sa partie inférieure, chaque cliquet (16, 17) coopérant avec le pignon (14), le choix du cliquet (16, 17) en prise sur le pignon (14) sélectionnant ledit sens autorisé (12 ou 13).

## Claims

1. Manually operated device (6) for winding a windable item (5), such as, for example, a cable, rope, film, web, canvas or tarpaulin, about a shaft or drum (9), including :
- a mechanism (8) for driving the shaft or drum (9), constituted by a toothed pinion (14) secured directly or indirectly to the said shaft or drum (9), which is rotationally mobile ;
- an operating handle (7, 34), pivotally mounted, acting upon the said mechanism (8) ;
- first and second locking means (10, 11), co-operating with one another, for selecting a direction of rotation for the said shaft or drum (9) and for driving the said shaft or drum (9) in rotation in the said direction by pivoting the operating handle ;
characterised by the fact that the said means (10, 11) include :
- a rocker means (15) with two catches (16, 17) provided for co-operating with the said toothed pinion (14) to constitute the said first locking means (10), the said rocker means (15) being mounted so as to be mobile about an axis (22) and having a return spring (23) one of the ends (24) of which is fixed and the other end (26)of which is integral with the rocker means (15), the longitudinal axis (28) of the spring and the imaginary axis passing through the fixed end (24) of the spring and the articulation (22) of the said rocker means (15) being concurrent, so as to permit the said selection of the direction of rotation, according to two stable positions, the said catches (16, 17) of the said rocker means (15) each having, on one side, an inclined portion (30, 32), capable of permitting rotation of the pinion (14) in a first direction and, on the other side, a steep portion (31, 33) capable of coming to bear on the flanks of the teeth of the said pinion (14) in order to block the said rotation in the other direction ;
- a reversible catch (35), provided at the end of the operating handle (7, 34) for co-operating with the said toothed pinion (14) to constitute the said second locking means (11), the said catch (35) defining a snug having, on one side, a slope, capable of permitting the rearward return to its point of departure of the said operating handle (7, 34), the said rotation then being blocked by the said rocker means (15) and, on the other side, a steep portion, capable of bearing on the teeth of the pinion (14) so as to permit the said driving in rotation in the said permitted direction.

2. Device according to claim 1, characterised by the fact that the said operating handle (7) has a lever (34).

3. Device according to claim 1, characterised by the fact that the said shaft of drum (9) is coaxial and associated with the toothed pinion (14).

4. Device according to claim 2, characterised by the fact that the said lever (34) is mounted for rotation, at least partial, about a pin (20, 21) and the said toothed pinion (14).

5. Device according to claim 2, characterised by the fact that the said rocker means (15) with two catches (16, 17) and the reversible catch (35) of the lever (34) are disposed on either side of the toothed pinion (14).

6. Device according to claim 1, characterised by the fact that the said rocker means (15) is mounted so as to be mobile in a fixed yoke (18, 19, 25), the said end (24) of the spring (23) being integral with the said yoke (18, 19, 25).

7. Device according to claim 2, characterised by the fact that the reversible catch (35) is provided at the end of the lever (34), and mounted mechanically in this area, in order to permit a rotation of at least 180° of the catch (35) about its longitudinal axis (37).

8. Device according to claim 7, characterised by the fact that the catch (35) is borne by a piston (38), and biased by a spring (39) towards the toothed pinion (14), the said piston (38) and the lever (34) being capable of being rotationally separated from one another, at least temporarily, to permit reversibility of the snug (35).

9. Device according to claim 1, characterised by the fact that the rocker means (15) has an upper catch (16) and a lower catch (17), disposed in a C shape, acting respectively on the upper portion of the pinion (14) and its lower portion, each catch (16, 17) co-operating with the pinion (14), with the choice of catch (16, 17) engaging with the gear (14) selecting the said permitted direction (12 or 13).

## Patentansprüche

1. Handbetätigte Vorrichtung (6) zum Aufrollen eines aufrollbaren Elements (5), wie z.B. eines Kabels, Taus, Films, einer Schar, eines Tuches oder Segeltuches, um eine Welle oder Trommel (9), umfassend:
- ein drehbewegliches Antriebmechanismus (8) für die Welle oder Trommel (9), das aus einem direkt oder indirekt an dieser Welle (9) oder Trommel befestigten Zahnrad (14) besteht,
- einen schwingend gelagerten Betätigungsgriff (7, 34), der das genannte Mechanismus (8) betätigt,
- erste und zweite Einrastmittel (10, 11), die mit einander zusammenwirken, um eine Drehrichtung für die genannte Welle oder Trommel (9) zu wählen und um die genannte Welle oder Trommel (9) durch Schwingung des Betätigungsgriffs in der genannten Drehrichtung in Drehung anzutreiben.
dadurch gekennzeichnet, daß die genannten Mittel (10, 11):
- einen Kipper (15) mit zwei Sperrklinken (16, 17) zum Zusammenwirken mit dem genannten Zahnrad (14), um die genannten, ersten Einrastmittel (10) zu bilden, wobei der genannte Kipper (15) um eine Achse (22) beweglich gelagert ist und eine Rückstellfeder (23) aufweist, deren eines Ende (24) fest und das andere (26) fest mit dem Kipper (15) verbunden ist, die Längsachse (28) der Feder und die durch das feste Ende (24) der Feder und das Gelenk (22) des genannten Kippers (15) führende, imaginäre Achse konvergierend sind, um die genannte Wahl der Drehrichtung gemäß zwei stabilen Stellungen zu erlauben, die genannten Sperrklinken (16, 17) des genannten Kippers (15) jeweils an einer Seite einen geneigten Bereich (30, 32) aufweisen, der geeignet ist, die Drehung des Zahnrads (14) in einer ersten Richtung zu erlauben, und an der anderen Seite einen steilen Bereich (31, 33), der geeignet ist, an die Flanke der Zähne des genannten Zahnrads (14) anzulehnen, um die genannte Drehung in der anderen Richtung zu verhindern,
- eine am Ende des Betätigungsgriffs (7, 34) vorgesehene, umkehrbare Sperrklinke (35) zum Zusammenwirken mit dem genannten Zahnrad (14), um die genannten, zweiten Einrastmittel (11) zu bilden, wobei die genannte, einen Dorn definierende Sperrklinke (35) an einer Seite eine Neigung aufweist, die geeignet ist, den Rückzug zum Ausgangspunkt des genannten Betätigungsgriffs (7, 34) zu erlauben, wobei die genannte Drehung dann vom genannten Kipper (15) verhindert wird, und an der anderen Seite einen steilen Bereich, der geeignet ist, sich auf den Zähnen des Zahnrads (14) abzustützen, um den genannten Drehantrieb in der genannten, erlaubten Richtung zu erlauben,
umfassen.

2. Vorrichtung nach Anspruch 1, dadurch gekennzeichnet, daß der genannte Betätigungsgriff (7) einen Hebel (34) aufweist.

3. Vorrichtung nach Anspruch 1, dadurch gekennzeichnet, daß die genannte Welle oder Trommel (9) koaxial zum und dem Zahnrad (14) zugeordnet ist.

4. Vorrichtung nach Anspruch 2, dadurch gekennzeichnet, daß der genannte Hebel (34) wenigstens teilweise um eine Achse (20-21) und das genannte Zahnrad (14) drehbar gelagert ist.

5. Vorrichtung nach Anspruch 2, dadurch gekennzeichnet, daß der genannte Kipper (15) mit zwei Sperrklinken (16, 17) und die umkehrbare Sperrklinke (35) des Hebels (34) beiderseits des Zahnrads (14) angeordnet sind.

6. Vorrichtung nach Anspruch 1, dadurch gekennzeichnet, daß der genannte Kipper (15) beweglich in einem festen Bügel (18, 19, 25) gelagert ist, wobei das genannte Ende (24) der Feder (23) fast mit dem genannten Bügel (18, 19, 25) verbunden ist.

7. Vorrichtung nach Anspruch 2, dadurch gekennzeichnet, daß die umkehrbare Sperrklinke (35) am Ende des Hebels (34) vorgesehen und in diesem Bereich mechanisch gelagert ist, um eine Drehung von wenigstens 180° der Sperrklinke (35) um deren Längsachse (37) zu erlauben.

8. Vorrichtung nach Anspruch 7, dadurch gekennzeichnet, daß die Sperrklinke (35) von einem Kolben (38) getragen und von einer Feder (39) zum Zahnrad (14) hin gedrückt wird, wobei der genannte Kolben (38) und der Hebel (34) geeignet sind, sich wenigstens vorläufig in Drehung von einander zu trennen, um die Umkehrbarkeit des Dorns (35) zu erlauben.

9. Vorrichtung nach Anspruch 1, dadurch gekennzeichnet, daß der Kipper (15) eine obere Sperrklinke (16) und eine untere Sperrklinke (17) aufweist, die C-förmig angeordnet sind und respektive den oberen Bereich des Zahnrads (14) und dessen unteren Bereich betätigen, wobei jede Sperrklinke (16, 17) mit dem Zahnrad (14) zusammenwirkt und die Wahl der Sperrklinke (16, 17) im Griff mit dem Zahnrad (14) die genannte, erlaubte Richtung (12 bzw. 13) wählt.
